# EUROPÄISCHE PATENTANMELDUNG

(11) **EP 1 719 931 A1**
(43) Veröffentlichungstag der Anmeldung: **08.11.2006**
(21) Anmeldenummer: 06009128.7
(22) Anmeldetag: 03.05.2006
(51) Int. Cl.: F16F 9/02

(54) **Gasfeder sowie Sicherheitseinrichtung im Bereich einer mechanischen Vorrichtung zum Heben und Absenken eines Nutzfahrzeugaufbaus**

(30) Priorität: 04.05.2005 DE 102005021379
(71) Anmelder: F. HESTERBERG & SÖHNE GmbH & Co. KG, 58256 Ennepetal (DE)
(72) Erfinder: Bosch, Heiko, 58339 Breckerfeld (DE); Feinbier, Joachim, 58256 Ennepetal (DE); Breme, Stefan, 58339 Breckerfeld (DE); Migchliesen, Bernhard, 58256 Ennepetal (DE)
(74) Vertreter: Döpp, Ludger

(57) **Zusammenfassung**

Gasfeder, zumindest beinhaltend einen Zylindermantel, eine innerhalb des Zylindermantels vorgesehene und eine Kolbenstange aufnehmende Führung, eine mit der Kolbenstange in Wirkverbindung stehende Drosselscheibe, die innerhalb eines mit Gas gefüllten Druckraumes relativ bewegbar ist sowie eine innerhalb des Zylindermantels vorgesehene Sicherheitseinrichtung, mittels derer bei Druckverlust im Bereich des Druckraums die Kolbenstange in definierter Position relativ zum Zylindermantel festsetzbar ist.

## Beschreibung

Die Erfindung betrifft eine Gasfeder.

Gasfedern werden in der Technik in vielfältiger Weise eingesetzt. Beispielhaft sei hier lediglich auf den Fahrzeugbau verwiesen. Hier werden Gasfedern vielfach für Heckklappen von Kraftfahrzeugen zum Einsatz gebracht.

Dem DE-Gbm 20 2004 015 535 ist ein Fahrzeug zu entnehmen, aufweisend eine Karosserie, eine über mindestens ein Scharnier daran angeschlossene schwenkbare Öffnungsklappe und eine Feder aus elastischem Federmaterial, die derart angeordnet ist, dass sie die Bewegung der Öffnungsklappe unterstützt sowie ferner aufweisend einen Fluiddämpfer, der zum Dämpfen der Bewegung der Öffnungsklappe angeschlossen ist, wobei der Fluiddämpfer als eine Zylinder-Kolben-Einheit ausgebildet ist, und wobei die Zylinder-Kolben-Einheit als ein offenes System mit zwei durch den Kolben getrennten Kammern und einer Drosselpassage zwischen den Kammern gebildet ist, wobei eine der Kammern gegen die Umgebung abgeschlossen ist und sich die zweite Kammer in Fluidverbindung mit der Umgebung befindet.

Ebenfalls denkbar ist, Gasfedern im Bereich mechanischer Vorrichtungen zum Heben eines auf Eckrungen ruhenden Dachs eines Nutzfahrzeugaufbaus einzusetzen.

Beispielhaft wird auf die DE-C 198 42 844 verwiesen, bei welcher die Vorrichtung oben an einer Eckrunge befestigt wird. Die Vorrichtung selber besteht aus einer Führung, in der ein Hubglied mit Dachanbindung auf- und abbeweglich geführt ist und aus einem mechanischen Antrieb, der zwischen dem Hubglied und einer Abstützung im unteren Bereich der Runge wirkt. Der mechanische Antrieb kann aus einem Kniehebel und aus einer Handhabe bestehen. Zwischen dem Hubglied und der Verlängerung der Führung kann sich mindestens eine Gasfeder erstrecken, die bezüglich ihres Druckvermögens so bemessen ist, dass sie den Druck des Dachs auf den Antrieb möglichst weitgehend verringert.

In den beispielhaft genannten Anwendungsfällen kann es geschehen, dass bei Ausfall der Gasfeder, beispielsweise durch Dichtungsversagen, die Funktion der Gasfeder nicht mehr gegeben ist und die damit in Wirkverbindung stehende Bauteile (Heckklappen, Hubglieder oder dergleichen) zu durch ungebremste Schwenk- oder Fallbewegung verursachte Personenschäden führen können.

Der Erfindung liegt die allgemeine Aufgabe zugrunde, eine Gasfeder bereitzustellen, die sicherheitstechnisch so ausgelegt ist, dass sie selbst bei Druckverlust noch eine Sicherheitsfunktion beinhaltet, so dass Unfälle mit Personenschäden weitestgehend vermieden sind.

Im Speziellen soll auch eine Sicherheitseinrichtung für eine mechanische Vorrichtung zum Heben eines auf Eckrungen ruhenden Dachs eines Nutzfahrzeugaufbaus bereitgestellt werden, die einfach im Aufbau ist, und wobei durch Einsatz derselben Unfälle weitestgehend verhindert werden.

Diese Aufgabe wird gelöst durch eine Gasfeder, zumindest beinhaltend einen Zylindermantel, eine innerhalb des Zylindermantels vorgesehene und eine Kolbenstange aufnehmende Führung, eine mit der Kolbenstange in Wirkverbindung stehende Drosselscheibe, die innerhalb eines mit Gas gefüllten Druckraums relativ bewegbar ist sowie eine innerhalb des Zylindermantels vorgesehene Sicherheitseinrichtung, mittels derer bei Druckverlust im Bereich des Druckraumes die Kolbenstange in definierter Position relativ zum Zylindermantel festsetzbar ist.

Vorteilhafte Weiterbildungen der erfindungsgemäßen Gasfeder sind den zugehörigen Unteransprüchen zu entnehmen.

Die Aufgabe wird auch gelöst durch einen Sicherheitseinrichtung im Bereich einer mechanischen Vorrichtung zum Heben und Absenken eines auf Eckrungen ruhenden Dachs eines Nutzfahrzeugaufbaus, wobei die Vorrichtung zumindest gebildet ist aus einer bedarfsweise mit einer Verlängerung in Wirkverbindung stehenden Führung, einem Hubglied mit Dachanbindung, einem mechanischen Antrieb sowie einer Gasfeder, die sich zwischen dem Hubglied und der Verlängerung bzw. der Führung erstreckt und bezüglich ihres Druckvermögens so bemessen ist, dass sie den Druck des Dachs auf den mechanischen Antrieb verringert, wobei die Gasfeder zumindest einen Zylindermantel, eine innerhalb des Zylindermantels vorgesehene und eine Kolbenstange aufnehmende Führung, eine mit der Kolbenstange in Wirkverbindung stehende Drosselscheibe, die innerhalb eines mit Gas gefüllten Druckraumes relativ bewegbar ist sowie eine innerhalb des Zylindermantels vorgesehene Sicherheitseinrichtung beinhaltet, mittels derer bei Druckverlust im Bereich des Druckraumes der Gasfeder die Kolbenstange der Gasfeder und somit auch das Hubglied in definierter Position relativ zur Verlängerung bzw. der Führung festsetzbar ist.

Vorteilhafte Weiterbildungen der erfindungsgemäßen Sicherheitseinrichtung sind den zugehörigen Unteransprüchen zu entnehmen.

Mit dem Erfindungsgegenstand wird somit eine allgemein einsetzbare Gasfeder bereitgestellt, die einen hohen Sicherheitsstandard gewährleistet und somit Unfallrisiken im Einsatzbereich der Gasfeder reduziert, so dass Personenschäden weitgehend ausgeschlossen sind.

Sowohl im allgemeinen auch als im speziellen Anwendungsbereich wird in jedem Fall sichergestellt, dass durch Arretierung der Kolbenstange bei auftretendem Druckverlust kein weiteres Absenken der betroffenen Bauteile mehr gegeben ist, die zu möglichen Personenschäden führen könnte.

Mit dem Erfindungsgegenstand sind eine Vielzahl von Ausführungsmöglichkeiten denkbar, von denen einige beispielhaft in der Zeichnung dargestellt sind. Es zeigen:
- Figur 1: Mechanische Vorrichtung zum Heben eines auf Eckrungen ruhenden Dachs eines Nutzfahrzeugaufbaus als Prinzipskizze in verschiedenen Ansichten;
- Figuren 2 und 3: Teildarstellung einer Gasfeder mit konstruktiv unterschiedlich ausgestalteten Sicherheitseinrichtungen, jeweils dargestellt an einer funktionsfähigen und einer defekten Gasfeder;
- Figur 4: Teildarstellung eines in Figur 3 abgebildeten Klemmelementes in verschiedenen Ansichten.

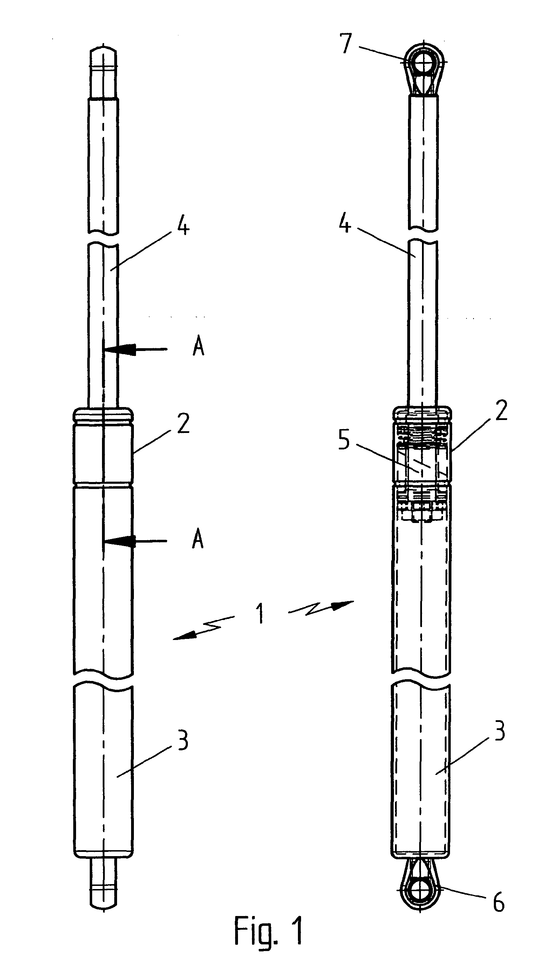

Figur 1 zeigt eine mechanische Vorrichtung 1 zum Heben eines auf Eckrungen ruhenden nicht weiter dargestellten Dachs eines Nutzfahrzeugaufbaus in verschiedenen Ansichten. Der besseren Übersicht halber werden lediglich die wesentlichen Funktionsteile der mechanischen Vorrichtung 1 angesprochen. Erkennbar ist eine Führung 2, eine damit in Wirkverbindung stehende Verlängerung 3, ein Hubglied 4 sowie eine hier nur angedeutete Gasfeder 5. Der konstruktive Aufbau der mechanischen Vorrichtung kann beispielsweise entsprechend dem Stand der Technik gemäß DE-C 198 42 844 vorgesehen werden, wobei dies lediglich eine beispielhafte Anordnung darstellt. Die Verlängerung 3 beinhaltet einen unteren Verlagerungsbereich 6 (nutzfahrzeugaufbauseitig), während das Hubglied 4 mit einem dachseitig vorgesehenen Anbindungsbereich 7 ausgerüstet ist.

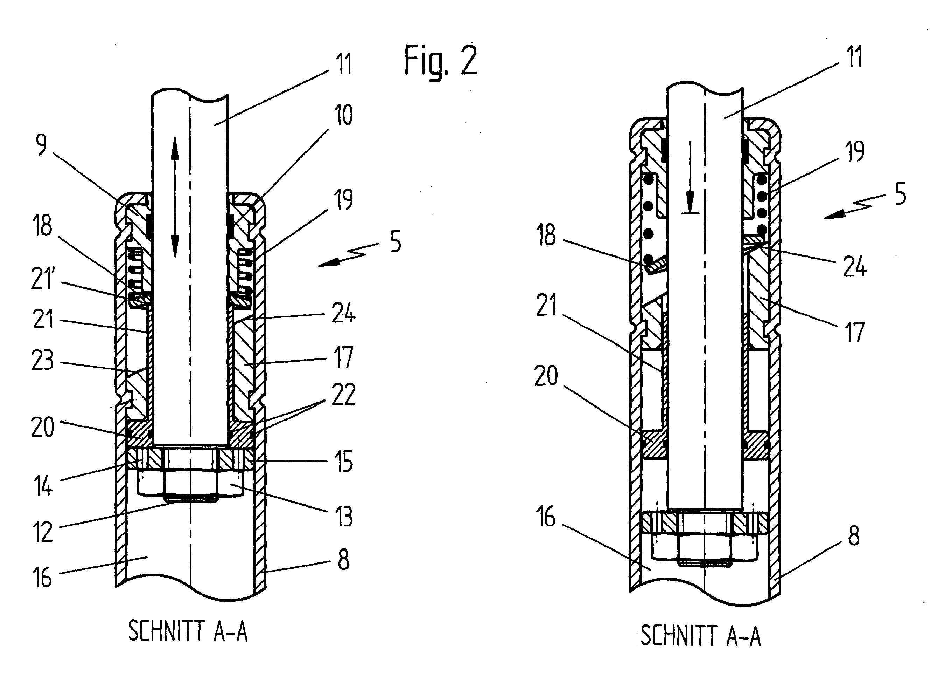

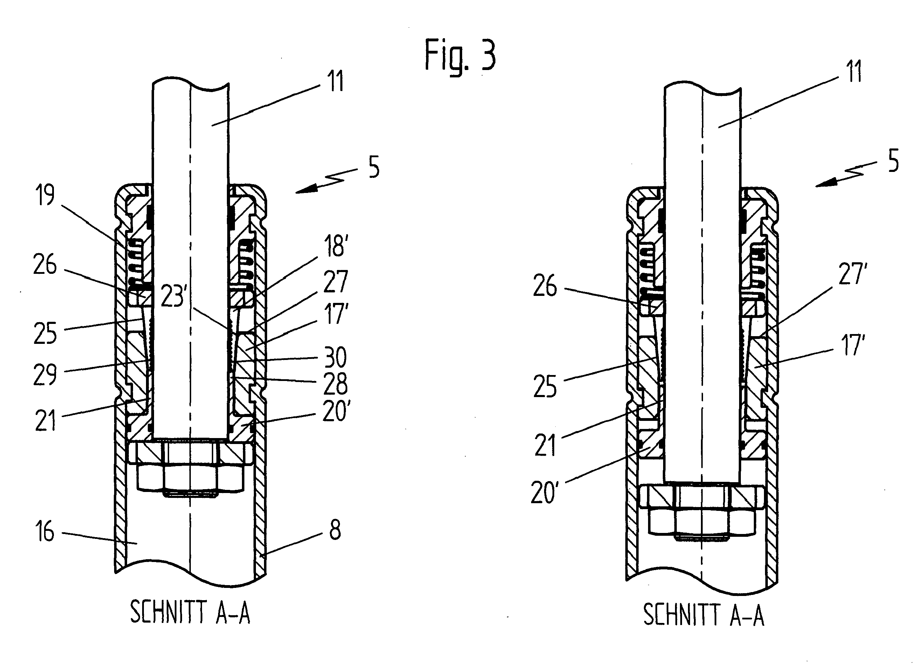

Die Figuren 2 und 3 zeigen jeweils Schnitte gemäß der Linie A-A der Figur 1, wobei konstruktiv unterschiedlich ausgebildete Sicherheitseinrichtungen dargestellt sind, die im Folgenden näher beschrieben werden.

Figur 2 zeigt die in Figur 1 angedeutete Gasfeder 5 im Teilschnitt, wobei das linke Bild eine funktionsfähige Gasfeder 5 und das rechte Bild eine defekte Gasfeder 5 zeigt. Die Gasfeder 5 besteht aus einem äußeren Zylindermantel 8, einer Führung 9 samt Dichtelement 10. Die Führung 9 ist fest mit dem Zylindermantel 8 verbunden. Die Führung 9 nimmt eine Kolbenstange 11 auf, die im Bereich ihres freien Endes 12 über eine Schraubenmutter 13 mit einer Drosselbohrungen 14 aufweisenden Drosselscheibe 15 in Wirkverbindung steht. Unterhalb der Drosselscheibe 15 wird ein mit Gas gefüllter Druckraum 16 gebildet. Zwischen der Drosselscheibe 15 und der Führung 9 erstreckt sich die erfindungsgemäße Sicherheitseinrichtung, die aus folgenden Bauteilen gebildet ist:
einem Anschlagelement 17, einem in diesem Beispiel als Klemmring ausgebildeten Klemmelement 18, einer als Schraubenfeder ausgebildeten Druckfeder 19, einem als Auslösekolben ausgebildeten Auslöseelement 20 sowie einem zylindrisch ausgebildeten Stützkörper 21, der in diesem Beispiel einstückig mit dem Auslösekolben 20 hergestellt ist. Der Auslösekolben 20 ist sowohl gegenüber dem Zylindermantel 8 als auch gegenüber der Kolbenstange 11 mittels Dichtungen 22 abgedichtet. Das Anschlagelement 17 ist mit einem geneigt verlaufenden Führungsabschnitt 23 versehen. Der Stützkörper 21 nimmt in seinem freien Endbereich 21' den unter Federkraft stehenden Klemmring 18 auf. Bei der im linken Bild der Figur 2 dargestellten funktionsfähigen Gasfeder 5 ist der im Druckraum 16 gegebene Gasdruck größer als die Kraft der Druckfeder 19, so dass selbige im Betriebszustand der Gasfeder 5 nicht wirksam ist und zwischen Klemmring 18 und oberer Begrenzungskante 24 des Anschlagelementes 17 ein definierter Spalt gegeben ist. Das Anschlagelement 17 ist, in gleicher Weise wie die Führung 9, fest mit dem Zylinderrohr 8 verbunden. Der mit dem Auslösekolben 20 einstückig hergestellte Stützkörper 21 ist in axialer Richtung innerhalb des Anschlagkörpers 17 relativ bewegbar.

Der rechte Teil der Figur 1 zeigt eine defekte Gasfeder 5, jedoch in gesicherter Position, so dass Personenschäden, beispielsweise durch herab fallende Bauteile vermieden werden. Wird der Gasdruck im Bereich des Druckraumes 16 geringer, beispielsweise durch Ausfall eines Dichtelementes 22,10 kann es geschehen, dass bei der Bewegung eines nicht weiter dargestellten Bauteiles die Kolbenstange 11 unter der Gewichtsbelastung des Bauteiles schlagartig innerhalb des Druckraums 16 einfährt. Hier beginnt nun die Federkraft der Druckfeder 19 zu wirken und bewegt über den Klemmring 18 den Stützkörper 21 und damit auch den Auslösekolben 20 relativ zur Kolbenstange 11 nach unten. Sobald der Klemmring 18 auf dem Bereich der oberen Begrenzungskante 24 des Anschlagelementes 17 zur Auflage kommt, wird selbiger in der dargestellten Form tordiert und arretiert die Kolbenstange 11 relativ zum Zylindermantel 8, so dass ein weiteres Einfahren der Kolbenstange 11 in den Druckraum 16 nicht mehr möglich ist. Die defekte Gasfeder 5 kann gegen ein neues Bauteil ausgetauscht werden.

Figur 3 zeigt die in Figur 2 abgebildete Gasfeder 5, wobei im Wesentlichen gleiche Bauteile zum Einsatz gelangen, so dass gleiche Bezugszeichen verwendet werden. Lediglich die Sicherheitseinrichtung ist konstruktiv etwas anders ausgeführt. Das Anschlagelement 17' weist einen geneigt verlaufenden Führungsabschnitt 23' auf, der in diesem Beispiel durch einen Einführkonus gebildet ist. Zum Einsatz gelangt ein Klemmelement 18', das in diesem Beispiel gebildet wird durch einen topfartig ausgebildeten Klemmkörper, der über einen geschlitzt ausgebildeten Klemmkonus 25 verfügt, wobei das als Druckfeder ausgebildete Federelement 19 auf einem zylindrisch ausgebildeten Abschnitt 26 des Klemmkörpers 18' abgestützt ist. Auch hier zeigt die linke Darstellung der Figur 3 eine funktionsfähige Gasfeder 5, deren Wirkungsweise im Wesentlichen der in Figur 2 beschriebenen Gasfeder 5 entspricht. Ist der Gasdruck im Druckraum 16 normal, ist das Federelement 19 wirkungslos, so dass ein definierter Spalt zwischen dem zylindrischen Abschnitt 26 und der oberen Begrenzungskante 27 des Anschlagelementes 17' gegeben ist. Analog zu Figur 2 verfügt der Auslösekolben 20' über einen angeformten zylindrisch ausgebildeten Stützkörper 21, der jedoch in diesem Beispiel axial kürzer baut als in Figur 2 angegeben. Das freie Ende 28 des Stützkörpers 21 nimmt das freie Ende 29 des mit einer Profilierung 30 versehenen Klemmkonus 25 auf, wobei eine Klemmung zwischen Klemmkonus 25 und Kolbenstange 11 im normalen Betriebszustand der Gasfeder 5 nicht gegeben ist.

Zwischen dem freien Ende 29 und dem Anschlagelement 17' einerseits und zwischen Ende 29 und der Kolbenstange 11 andererseits ist im normalen Betriebszustand ein geringer Arbeitsspalt (nicht dargestellt) gegeben. Somit kann die Kolbenstange 11 problemlos betätigt werden.

Das rechte Bild der Figur 3 zeigt eine defekte Gasfeder 5. Der Spalt zwischen dem zylindrischen Abschnitt 26 und der oberen Begrenzungskante 27 des Anschlagelementes 17' ist nun reduziert, was dadurch herbeigeführt wird, dass der Gasdruck im Druckraum 16 geringer ist als die Federkraft des Federelementes 19. Das Federelement 19 wirkt über den zylindrischen Abschnitt 26 auf den Stützkörper 21 und somit auf den Auslösekolben 20' ein und verschiebt selbigen in Richtung des Druckraumes 16. Der Klemmkonus 25 wird in den geneigt verlaufenden Führungsabschnitt 23' eingedrückt, wodurch nun über die Profilierung 30 eine Klemmung der Kolbenstange 11 relativ zum umgebenden Anschlagelement 17', respektive zu dem damit verbundenen Zylindermantel 8, herbeigeführt wird.

Wie bereits eingangs ausgeführt, kann die erfindungsgemäße Gasfeder beispielsweise auch beim Stand der Technik gemäß DE-Gbm 20 2004 015 535 zum Einsatz gebracht werden. Gleiches gilt für andersartige technische Anwendungsfälle, bei denen Gasfedern üblicherweise zum Einsatz gelangen. Der Erfindungsgegenstand ist somit nicht auf eine mechanische Vorrichtung zum Heben eines auf Eckrungen ruhenden Dachs eines Nutzfahrzeugaufbaus beschränkt, sondern vielmehr universell einsetzbar.

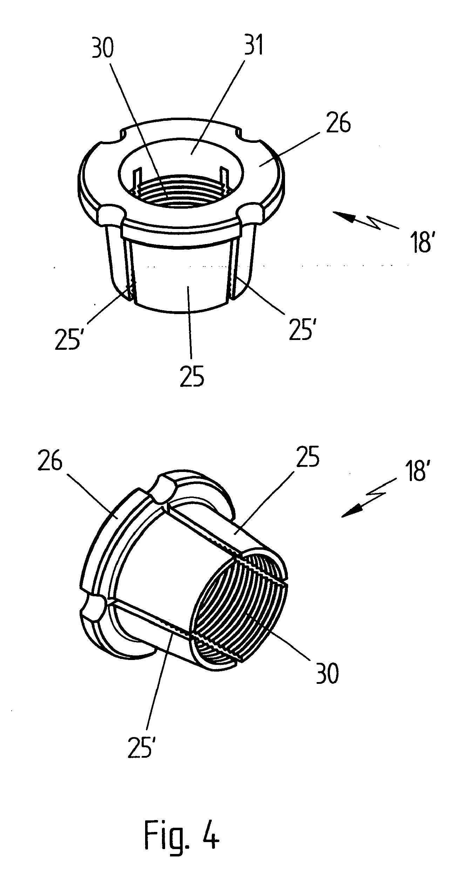

Figur 4 zeigt das in Figur 3 lediglich angedeutete Klemmelement 18'. Erkennbar ist der zylindrisch ausgebildete Abschnitt 26 sowie der mit Schlitzen 25' versehene Klemmkonus 25. Am Innenumfang 31 verfügt der Klemmkonus 25 über die bereits angedeutete Profilierung 30, über welche die entsprechende Klemmkraft auf die Kolbenstange (hier nicht dargestellt) übertragen wird.

### Bezugszeichenliste

- 1: mechanische Vorrichtung
- 2: Führung
- 3: Verlängerung
- 4: Hubglied
- 5: Gasfeder
- 6: unterer Verlagerungsbereich
- 7: dachseitiger Anbindungsbereich
- 8: äußerer Zylindermantel
- 9: Führung
- 10: Dichtelement
- 11: Kolbenstange
- 12: freies Ende
- 13: Schraubenmutter
- 14: Drosselbohrung
- 15: Drosselscheibe
- 16: Druckraum
- 17: Anschlagelement
- 17': Anschlagelement
- 18: Klemmelement (Klemmring)
- 18': Klemmelement (topfartiger Klemmkörper)
- 19: Schraubenfeder
- 20: Auslöseelement (Auslösekolben)
- 20': Auslöseelement (Auslösekolben)
- 21: Stützkörper
- 21': freier Endbereich
- 22: Dichtung
- 23: Führungsabschnitt
- 23': Führungsabschnitt
- 24: obere Begrenzungskante
- 25: Klemmkonus
- 25': Schlitz
- 26: zylindrischer Abschnitt
- 27: obere Begrenzungskante
- 28: freies Ende
- 29: freies Ende
- 30: Profilierung
- 31: Innenumfang

## Patentansprüche

1. Gasfeder, zumindest beinhaltend einen Zylindermantel (8), eine innerhalb des Zylindermantels (8) vorgesehene und eine Kolbenstange (11) aufnehmende Führung (9), eine mit der Kolbenstange (11) in Wirkverbindung stehende Drosselscheibe (15), die innerhalb eines mit Gas gefüllten Druckraumes (16) relativ bewegbar ist sowie eine innerhalb des Zylindermantels (8) vorgesehene Sicherheitseinrichtung, mittels derer bei Druckverlust im Bereich des Druckraums (16) die Kolbenstange (11) in definierter Position relativ zum Zylindermantel (8) festsetzbar ist.

2. Gasfeder nach Anspruch 1, **dadurch gekennzeichnet, dass** die Sicherheitseinrichtung zumindest ein Anschlagelement (17,17'); ein federbelastetes Klemmelement (18,18') sowie ein Auslöseelement (20,20') umfasst.

3. Gasfeder nach Anspruch 1 oder 2, **dadurch gekennzeichnet, dass** die die Sicherheitseinrichtung bildenden Bauteile (17,17',18,18',20,20') axial zwischen der Führung (9) und der Drosselscheibe (15) angeordnet sind.

4. Gasfeder nach einem der Ansprüche 1 bis 3, **dadurch gekennzeichnet, dass** das Anschlagelement (17,17') fest mit dem Zylindermantel (8) verbunden ist.

5. Gasfeder nach einem der Ansprüche 1 bis 4, **dadurch gekennzeichnet, dass** das Anschlagelement (17,17') führungsseitig mit einem Führungsabschnitt (23,23') für das federbelastete Klemmelement (18,18') versehen ist.

6. Gasfeder nach einem der Ansprüche 1 bis 5, **dadurch gekennzeichnet, dass** das Anschlagelement (17,17') mindestens einen geneigt verlaufenden Führungsabschnitt (23,23') für das Klemmelement (18,18') aufweist.

7. Gasfeder nach einem der Ansprüche 1 bis 6, **dadurch gekennzeichnet, dass** das Auslöseelement (20,20') durch einen außerhalb der Drosselscheibe (15) vorgesehenen Auslösekolben gebildet ist, der mit einem zylindrisch ausgebildeten Stützkörper (21,21') zur Abstützung des Klemmelementes (18,18') zusammenwirkt.

8. Gasfeder nach einem der Ansprüche 1 bis 7, **dadurch gekennzeichnet, dass** der Auslösekolben (20,20') und der Stützkörper (21,21') einstückig miteinander verbunden bzw. hergestellt sind.

9. Gasfeder nach einem der Ansprüche 1 bis 8, **dadurch gekennzeichnet, dass** der Stützkörper (21,21') axial beweglich innerhalb des Anschlagelementes (17,17') geführt ist.

10. Gasfeder nach einem der Ansprüche 1 bis 9, **dadurch gekennzeichnet, dass** das Klemmelement (18,18') in funktionsfähigem Zustand der Gasfeder (5) mit vorgebbarem Abstand außerhalb des geneigt verlaufenden Führungsabschnittes (23,23') auf dem freien Ende (21',28) des Stützkörpers (21) aufliegt, wobei bei Druckverlust im Druckraum (16) das Klemmelement (18,18') samt Stützkörper (21) und Auslösekolben (20,20') durch die Kraft des zugeordneten, sich zwischen Klemmelement (18,18') und Führung (9) erstreckenden Federelementes (19) in Richtung des geneigt verlaufenden Führungsabschnittes (23,23') des Anschlagelementes (17,17') bewegbar und durch elastische Verformung des Klemmelementes (18,18') eine Festsetzung der Kolbenstange (11), relativ zum umgebenden Zylindermantel (8), herbeiführbar ist.

11. Gasfeder nach einem der Ansprüche 1 bis 10, **dadurch gekennzeichnet, dass** das Klemmelement (18) durch mindestens einen Klemmring gebildet ist und dass das als Druckfeder ausgebildete Federelement (19) führungsseitig im radial äußeren Umfangsbereich des Klemmringes (18) aufliegt.

12. Gasfeder nach einem der Ansprüche 1 bis 11, **dadurch gekennzeichnet, dass** das Klemmelement (18') durch einen topfartig ausgebildeten Klemmkörper gebildet ist, der anschlagseitig über einen geschlitzt ausgebildeten Klemmkonus (25) verfügt, wobei das als Druckfeder ausgebildete Federelement (19) führungsseitig auf einem zylindrisch ausgebildeten Abschnitt (26) des Klemmelementes (18') abgestützt ist.

13. Gasfeder nach einem der Ansprüche 1 bis 12, **dadurch gekennzeichnet, dass** der Bereich des Klemmkonus (25) kolbenstangenseitig mit einer Profilierung (30) versehen ist.

14. Sicherheitseinrichtung im Bereich einer mechanischen Vorrichtung zum Heben und Absenken eines auf Eckrungen ruhenden Daches eines Nutzfahrzeugaufbaus, wobei die Vorrichtung zumindest gebildet ist aus einer bedarfsweise mit einer Verlängerung (3) in Wirkverbindung stehenden Führung (2), einem Hubglied (4) mit Dachanbindung, einem mechanischen Antrieb sowie einer Gasfeder (5), die sich zwischen dem Hubglied (4) und der Verlängerung (3) bzw. der Führung (2) erstreckt und bezüglich ihres Druckvermögens so bemessen ist, dass sie den Druck des Daches auf den mechanischen Antrieb verringert, **dadurch gekennzeichnet, dass** die Gasfeder (5) zumindest einen Zylindermantel (8), eine innerhalb des Zylindermantels (8) vorgesehene und eine Kolbenstange (11) aufnehmende Führung (9), eine mit der Kolbenstange (11) in Wirkverbindung stehende Drosselscheibe (15), die innerhalb eines mit Gas gefüllten Druckraumes (16) relativ bewegbar ist sowie eine innerhalb des Zylindermantels (8) vorgesehene Sicherheitseinrichtung beinhaltet, mittels derer bei Druckverlust im Bereich des Druckraumes (16) der Gasfeder (5) die Kolbenstange (11) der Gasfeder (5) und somit auch das Hubglied (4) in definierter Position relativ zur Verlängerung (3) bzw. der Führung (2) festsetzbar ist.

15. Sicherheitseinrichtung nach Anspruch 14, **dadurch gekennzeichnet, dass** die Gasfeder (5) zumindest ein Anschlagelement (17,17'), ein federbelastetes Klemmelement (18,18') sowie ein Auslöseelement (20,20') beinhaltet, die axial zwischen der Führung (9) und der Drosselscheibe (15) angeordnet sind.

16. Sicherheitseinrichtung nach einem der Ansprüche 14 oder 15, **dadurch gekennzeichnet, dass** das Anschlagelement (17,17') fest mit dem Zylindermantel (8) verbunden ist.

17. Sicherheitseinrichtung nach einem der Ansprüche 14 bis 16, **dadurch gekennzeichnet, dass** das Anschlagelement (17,17') führungsseitig mit einem Führungsabschnitt (23,23') für das federbelastete Klemmelement (18,18') versehen ist.

18. Sicherheitseinrichtung nach einem der Ansprüche 14 bis 17, **dadurch gekennzeichnet, dass** das Anschlagelement (17,17') mindestens einen geneigt verlaufenden Führungsabschnitt (23,23') für das Klemmelement (18,18') aufweist.

19. Sicherheitseinrichtung nach einem der Ansprüche 14 bis 18, **dadurch gekennzeichnet, dass** das Auslöseelement (20,20') durch einen oberhalb der Drosselscheibe (15) vorgesehenen Auslösekolben gebildet ist, der mit einem zylindrisch ausgebildeten Stützkörper (21) zur Abstützung des Klemmelementes (18,18') zusammenwirkt.

20. Sicherheitseinrichtung nach einem der Ansprüche 14 bis 19, **dadurch gekennzeichnet, dass** der Auslösekolben (20,20') und der Stützkörper (21) einstückig miteinander verbunden bzw. hergestellt sind.

21. Sicherheitseinrichtung nach einem der Ansprüche 14 bis 20, **dadurch gekennzeichnet, dass** der Stützkörper (21) axial beweglich innerhalb des Anschlagelementes (17,17') geführt ist.

22. Sicherheitseinrichtung nach einem der Ansprüche 14 bis 21, **dadurch gekennzeichnet, dass** das Klemmelement (18,18') in funktionsfähigem Zustand der Gasfeder (5) mit vorgebbarem Abstand außerhalb des geneigt verlaufenden Führungsabschnittes (23,23') auf dem freien Ende (21',28) des Stützkörpers (21) aufliegt, wobei bei Druckverlust im Druckraum (16) das Klemmelement (18,18') samt Stützkörper (21,21') und Auslöseelement (20,20') durch die Kraft des zugeordneten, sich zwischen Klemmelement (18,18') und Führung (9) erstreckenden Federelementes (19) in Richtung des geneigt verlaufenden Führungsabschnittes (23,23') des Anschlagelementes (17,17') bewegbar und durch elastische Verformung des Klemmelementes (18,18') eine Festsetzung der Kolbenstange (11), relativ zum umgebenden Zylindermantel (8), herbeiführbar ist.

23. Sicherheitseinrichtung nach einem der Ansprüche 14 bis 22, **dadurch gekennzeichnet, dass** das Klemmelement (18) durch mindestens einen Klemmring gebildet ist, und dass das als Druckfeder ausgebildete Federelement (19) führungsseitig im radial äußeren Umfangsbereich des Klemmringes (18) aufliegt.

24. Sicherheitseinrichtung nach einem der Ansprüche 14 bis 23, **dadurch gekennzeichnet, dass** das Klemmelement (18') durch einen topfartig ausgebildeten Klemmkörper gebildet ist, der anschlagseitig über einen geschlitzt ausgebildeten Klemmkonus (25) verfügt, wobei das als Druckfeder ausgebildete Federelement (19) führungsseitig auf einem zylindrisch ausgebildeten Abschnitt (26) des Klemmelementes (18') aufliegt.

25. Sicherheitseinrichtung nach einem der Ansprüche 14 bis 24, **dadurch gekennzeichnet, dass** der Bereich des Klemmkonus (25) kolbenstangenseitig mit einer Profilierung (30) versehen ist.
